# EUROPÄISCHE PATENTSCHRIFT

(11) **EP 3 691 960 B1**
(45) Veröffentlichungstag und Bekanntmachung des Hinweises auf die Patenterteilung: **06.01.2021**
(21) Anmeldenummer: 19823762.0
(22) Anmeldetag: 09.12.2019
(51) Int. Cl.: B62J 27/00, B62J 99/00, B60W 40/06, B60W 50/00

(54) **VERFAHREN ZUR BESTIMMUNG VON KRITISCHEN STRASSENABSCHNITTEN FÜR MOTORISIERTE ZWEIRÄDER**
METHOD FOR DETERMINATION OF ACCIDENTAL HOTSPOTS FOR MOTORISED TWO-WHEELED VEHICLES
MÉTHODE DE DÉTERMINATION DES SECTIONS DE ROUTE CRITIQUES POUR LES DEUX-ROUES MOTORISÉS

(30) Priorität: 13.12.2018 AT 511052018
(43) Veröffentlichungstag der Anmeldung: 12.08.2020
(73) Patentinhaber: AIT Austrian Institute of Technology GmbH, 1210 Wien (AT)
(72) Erfinder: HULA, Andreas, 1130 Wien (AT)
(74) Vertreter: Wildhack & Jellinek
(86) Internationale Anmeldenummer: PCT/AT2019/060429
(87) Internationale Veröffentlichungsnummer: WO 2020/118337

(56) Entgegenhaltungen:
- DE-A1-102015 000 856
- BERNHARD GAHR ET AL: "An In-Vehicle Information System Providing Accident Hotspot Warnings", TWENTY-FOURTH EUROPEAN CONFERENCE ON INFORMATION SYSTEMS (ECIS), ISTANBUL, TURKEY 2016, 1. Januar 2016 (2016-01-01), XP055668505, DOI: 10.3929/ETHZ-B-000121549
- BENJAMIN RYDER ET AL: "Autonomously detecting and classifying traffic accident hotspots", PROCEEDINGS OF THE 2017 ACM INTERNATIONAL JOINT CONFERENCE ON PERVASIVE AND UBIQUITOUS COMPUTING AND PROCEEDINGS OF THE 2017 ACM INTERNATIONAL SYMPOSIUM ON WEARABLE COMPUTERS ON , UBICOMP '17, 1. Januar 2017 (2017-01-01), Seiten 365-370, XP055668480, New York, New York, USA DOI: 10.1145/3123024.3123199 ISBN: 978-1-4503-5190-4
- Farah Alkhalisi: "Ford's big data study identifies potential traffic accident hotspots, gives insights for electromobility and city authorities", , 5. Dezember 2018 (2018-12-05), Seiten 1-3, XP055668457, automotiveIT international Gefunden im Internet: URL:https://www.automotiveit.com/connected -car/fords-big-data-study-identifies-poten tial-traffic-accident-hotspots-gives-insig hts-for-electromobility-and-city-authoriti es/5732.article?adredir=1 [gefunden am 2020-02-13]
- BENJAMIN RYDER ET AL: "Preventing traffic accidents with in-vehicle decision support systems - The impact of accident hotspot warnings on driver behaviour", DECISION SUPPORT SYSTEMS, Bd. 99, 1. Juli 2017 (2017-07-01), Seiten 64-74, XP055668517, NL ISSN: 0167-9236, DOI: 10.1016/j.dss.2017.05.004
- CHACZKO ZENON ET AL: "Road Vehicle Alert System Using IOT", 2017 25TH INTERNATIONAL CONFERENCE ON SYSTEMS ENGINEERING (ICSENG), IEEE, 22. August 2017 (2017-08-22), Seiten 488-493, XP033273510, DOI: 10.1109/ICSENG.2017.72 [gefunden am 2017-11-27]
- YALCIN GULER ET AL: "Spatial analysis of two-wheeled vehicles traffic crashes: Osmaniye in Turkey", KSCE JOURNAL OF CIVIL ENGINEERING, KOREAN SOCIETY OF CIVIL ENGINEERS, HEIDELBERG, Bd. 19, Nr. 7, 6. Februar 2015 (2015-02-06), Seiten 2225-2232, XP035956624, ISSN: 1226-7988, DOI: 10.1007/S12205-015-0661-0 [gefunden am 2015-02-06]
- CUENCA LAURA GARCIA ET AL: "Traffic Hotspots Visualization and Warning System", 2018 IEEE INTERNATIONAL CONFERENCE ON VEHICULAR ELECTRONICS AND SAFETY (ICVES), IEEE, 12. September 2018 (2018-09-12), Seiten 1-5, XP033439342, DOI: 10.1109/ICVES.2018.8519485 [gefunden am 2018-10-31]

## Beschreibung

Die Erfindung betrifft ein Verfahren zur Bestimmung von kritischen Straßenabschnitten für motorisierte Zweiräder, insbesondere Motorräder, gemäß Patentanspruch 1.

Die Wahrscheinlichkeit, mit einem Motorrad zu verunglücken, ist nach wie vor um ein Vielfaches höher als mit einem PKW. Komplexe Fahrdynamik und Fahrphysik führen insbesondere bei ungeübten Motorradfahrern zu Fahrfehlern. Diese wiederum wirken sich naturgemäß bei einem Unfall mit einem Motorrad schwerwiegender aus, als bei einem PKW-Unfall, da eine schützende Karosserie bzw. Knautschzone bei einem Motorrad fehlen. Konzepte zur Vermeidung schwerer Motorradunfälle und zur Erhöhung der Sicherheit von Motorradfahrern sind daher wünschenswert.

Langjährige Unfallstatistiken belegen, dass sich Motorradunfälle in bestimmten Straßenabschnitten häufen, wo beispielsweise aufgrund der Straßenführung Gefahrenstellen für Motorradfahrer vorhanden sind. In diesem Zusammenhang ist es wünschenswert, Informationen für die Straßenerhalter bereitzustellen, sodass diese effizient, kostengünstig und nachhaltig derartige Gefahrenstellen entschärfen oder beseitigen können.

Das Konferenzpapier "AN IN-VEHICLE INFORMATION SYSTEM PROVIDING ACCIDENT HOTSPOT WARNINGS", Autoren: Ryder, Gahr und Dahlinger, veröffentlicht 2016 zur "Twenty-Fourth European Conference on Information Systems (ECIS)" in Istanbul, Türkei, beschreibt ein Verfahren zur Identifizierung von Hotspots wobei mittels einer Karte, GPS, Beschleunigungsmesswerten und Clustering erkannte Strassenabschnitte als Hotspots erkannt und ausgegeben werden.

Aufgabe der Erfindung ist es daher, ein Verfahren zur Verfügung zu stellen, das auf einfache und zuverlässige Weise kritische Straßenabschnitte für motorisierte Zweiräder ermittelt.

Die Erfindung löst diese Aufgabe mit einem Verfahren zur Bestimmung von kritischen Straßenabschnitten für motorisierte Zweiräder, insbesondere Motorräder, gemäß Patentanspruch 1. Erfindungsgemäß ist dabei vorgesehen, dass
a) eine Karte von Streckenabschnitten zur Verfügung gestellt wird, in denen einzelne vergangene Verkehrsunfälle von motorisierten Zweirädern verzeichnet sind,
b) jeweils mittels eines motorisierten Zweirads Testfahrten in den zu untersuchenden Straßenabschnitten vorgenommen werden,
   - wobei jeweils zu einzelnen Zeitpunkten Datensätze erstellt werden, die die geographische Position des Zweirads sowie eine Anzahl von die Bewegung des Zweirads charakterisierenden Bewegungswerten umfassen,
   - wobei die einzelnen Bewegungswerte insbesondere festgelegt sind durch:
      - Beschleunigungsmesswerte nach einer oder mehrerer Raumrichtungen- bezogen auf das Zweirad und/oder
      - Winkelgeschwindigkeitsmesswerte des Zweirads, gemessen jeweils um Achsen, die vorzugsweise in Bezug auf das Zweirad festgelegt sind, und/oder
      - gegebenenfalls zeitliche Ableitungen dieser Messwerte, und/oder
      - davon abgeleitete Werte,
c) unter den ermittelten Datensätzen aufgrund der Bewegungswerte ein Clustering vorgenommen wird und nach einem oder mehreren einen normalen Bewegungsablauf charakterisierenden Clustern gesucht wird, die eine möglichst große Anzahl von Datensätzen enthalten,
d) mittels Diskriminanzanalyse eine zwischen kritischen und unkritischen Datensätzen diskriminierende Funktion abhängig von den Bewegungswerten der Datensätze gesucht wird, die
   - einzelne Datensätze, die aus geographischen Positionen stammen, die aufgrund der vorgegebenen Karte einer Region mit einem Verkehrsunfall zugeordnet sind, als kritische Datensätze und
   - einzelne weitere Datensätze, für die dies nicht zutrifft, als unkritische Datensätze, voneinander zumindest im Mittel, insbesondere exakt, abgrenzt,
   wobei die ermittelten Cluster oder daraus abgeleitete Werte für die Bildung der Diskriminanzfunktion herangezogen werden, dass die in den Clustern enthaltenen Datensätze zumindest im Mittel durch die Diskriminanzfunktion als unkritisch klassifiziert werden,
e) gegebenenfalls weitere Datensätze aufgrund weiterer Testfahrten analog zu Schritt b) ermittelt werden, und
f) diejenigen Straßenabschnitte, in denen Datensätze oder gegebenenfalls weitere Datensätze vorhanden sind, die entsprechend der Diskriminanzanalyse als kritische Datensätze erkannt wurden, als kritische Straßenabschnitte identifiziert werden und wobei
   - während einer Fahrt eines motorisierten Zweirads in einem zu untersuchenden Streckenabschnitt laufend untersucht wird, ob sich die jeweils aktuelle geographische Position des Zweirads einem als kritisch identifizierten Streckenabschnitt nähert und
   - ein Hinweis an den Fahrer des motorisierten Zweirads abgegeben wird, wenn eine derartige Annäherung erkannt wird.

Auf diese Weise ist eine zuverlässige Identifizierung kritischer Straßenabschnitte durch die Extraktion von Strecken- und Fahrteigenschaften aus einer oder mehrerer Testfahrten, die naturgemäß verschiedene Fahrstile aufweisen, in Kombination mit Informationen über Streckenabschnitte, an denen in der Vergangenheit Verkehrsunfälle mit motorisierten Zweirädern aufgetreten sind, gewährleistet. In diesem Zusammenhang können effizient bestehende Ähnlichkeiten, beispielsweise in der Straßenführung eines zu untersuchenden Straßenabschnitts zu Streckenabschnitten mit bekannten Unfallhäufungsstellen, ausgenutzt werden.

So kann ein Motorradfahrer auch während der Fahrt aktiv vor Unfallhäufungs- oder Gefahrenstellen bzw. kritischen Streckenabschnitt gewarnt werden. Auf diese Weise ist der Motorradfahrer rechtzeitig gewarnt, dass er sich einem gefährlichen Straßenabschnitt nähert, sodass er rechtzeitig sein Fahrverhalten anpassen und derart den kritischen Streckenabschnitt sicherer passieren kann.

Eine besonders exakte Ermittlung von als kritisch einzustufenden Straßenabschnitten kann erzielt werden, wenn
- die Diskriminanzanalyse eine in Bezug auf die Bewegungswerte festgelegte, insbesondere stetige, Diskriminanzfunktion liefert, und
- dass die folgenden Testfahrten herangezogen werden,
   - Testfahrten, nach Schritt b)
   - weitere Testfahrten, nach Schritt e)
   - andere Testfahrten
- wobei für einzelne dieser Testfahrten oder für eine Anzahl von vom selben Testfahrer ausgeführten Testfahrten jeweils ein Mittelwert der Diskriminanzfunktion angewendet auf die Datensätze der jeweiligen Testfahrt oder Testfahrten ermittelt wird, wobei für die Bildung des Mittelwerts ausschließlich diejenigen Datensätze verwendet werden, die sich innerhalb eines kritischen Straßenabschnitts befinden,
- wobei für einzelne dieser Testfahrten oder für eine Anzahl von vom selben Testfahrer ausgeführten Testfahrten der Mittelwert als Schwellenwert herangezogen wird und untersucht wird, an welchen Stellen der Wert der Diskriminanzfunktion angewendet auf den jeweiligen Datensatz den Mittelwert überschreitet und
- wobei für einzelne geographische Positionen jeweils ein Verhältnis zwischen der Anzahl der Schwellenwertüberschreitungen und der Anzahl der Testfahrten jeweils an der betreffenden geographischen Position, ermittelt und als zusätzliches Maß für die Kritikalität der betreffenden geographischen Position zur Verfügung gestellt wird.

Eine besonders zuverlässige Diskriminanzfunktion kann auf rechnerisch einfache Weise gefunden werden, wenn in Schritt d) mittels Diskriminanzanalyse eine diskriminierende Funktion abhängig von den Bewegungswerten gesucht wird, die
- einzelne Datensätze, die aus geographischen Positionen stammen, die aufgrund der vorgegebenen Karte einer Region mit einem Verkehrsunfall zugeordnet sind, mit Ausnahme derjenigen Datensätze, die in Schritt c) einem Cluster zugeordnet wurden, als kritische Datensätze und
- alle übrigen Datensätze, für die dies nicht zutrifft oder die sich innerhalb eines zuvor ermittelten den normalen Bewegungsablauf charakterisierenden Clustern befinden, als unkritische Datensätze,
voneinander, insbesondere exakt, abgrenzt.

Um beispielsweise einen Motorradfahrer während der Fahrt warnen zu können, dass sein aktueller Fahrstil potentiell zu riskant ist, kann vorgesehen sein, dass
- vorab für eine Anzahl von vom selben Fahrer ausgeführten Fahrten mit einem motorisierten Zweirad jeweils ein Mittelwert der Diskriminanzfunktion angewendet auf die Datensätze der jeweiligen Fahrt oder Fahrten, ermittelt wird,
   wobei insbesondere vorgesehen ist, dass
   - für die Bildung des Mittelwerts ausschließlich diejenigen Datensätze verwendet werden, die sich innerhalb eines kritischen Straßenabschnitts befinden, und/oder
   - für eine Anzahl von vom selben Fahrer ausgeführten Fahrten ein gemeinsamer Mittelwert ermittelt wird,
- der derart ermittelte Mittelwert als Grenzwert herangezogen,
- während einer Fahrt desselben Fahrers laufend untersucht wird, ob der Wert der Diskriminanzfunktion angewendet auf die während der Fahrt erstellten jeweils aktuellen Datensätze innerhalb eines vorgegebenen Wertebereichs unterhalb des für den jeweiligen Fahrer ermittelten Grenzwerts liegt und/oder den ermittelten Grenzwert überschreitet und
- sofern festgestellt wird, dass der Wert innerhalb des vorgegebenen Wertebereichs liegt und/oder den ermittelten Grenzwert überschreitet, ein Hinweis an den Fahrer des motorisierten Zweirads abgegeben wird.
Auf diese Weise kann der Motorradfahrer rechtzeitig seinen Fahrstil anpassen und derart das Risiko senken, zu verunfallen.

Weitere Vorteile und Ausgestaltungen der Erfindung ergeben sich aus der Beschreibung und den beiliegenden Zeichnungen.

Die Erfindung wird im Folgenden anhand von besonders vorteilhaften, aber nicht einschränkend zu verstehendenden Ausführungsbeispielen in den Zeichnungen schematisch dargestellt und wird unter Bezugnahme auf die Zeichnungen beispielhaft beschrieben.

Im Folgenden zeigen:
Fig. 1 schematisch ein motorisiertes Zweirad mit einer Sensoreinheit,
Fig. 2 schematisch ein Beispiel einer Karte mit Streckenabschnitten, in denen einzelne vergangene Verkehrsunfälle motorisierter Zweiräder verzeichnet sind,
Fig. 3 schematisch das Ergebnis einer Diskriminanzanalyse in einem Merkmalsraum,
Fig. 4 ein Beispiel einer Diskriminanzanalyse in einem Merkmalsraum enthaltend Datensätze verschiedener Streckenabschnitte,
Fig. 5 schematisch die Ermittlung von Schwellenwertüberschreitungen für eine Anzahl von Testfahrten als Maß für die Kritikalität von geografischen Positionen.

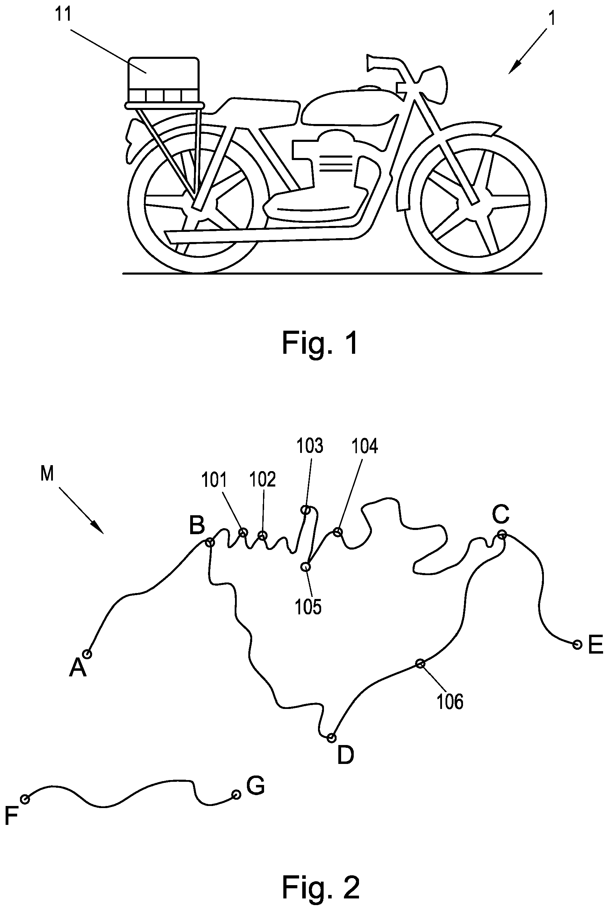

Fig. 1 zeigt schematisch ein Beispiel eines motorisierten Zweirads 1, das für Testfahrten F₁, F₂, F₃ in zu untersuchenden Straßenabschnitten herangezogen wird. Im gezeigten Ausführungsbeispiel handelt es sich beim motorisierten Zweirad 1 um ein Motorrad, an dem eine Sensoreinheit 11 angeordnet ist. Eine derartige Sensoreinheit 11 kann beispielsweise Videosysteme sowie Sensoren umfassen, die während der Fahrt laufend den Zustand des motorisierten Zweirads 1 erfassen und Daten zu beispielsweise Fahrdynamik, Fahrlinie und Streckenführung ermitteln.

Bei den Sensoren kann es sich beispielsweise um Beschleunigungssensoren handeln, die Beschleunigungsmesswerte X₁, nach einer oder mehreren Raumrichtungen bezogen z.B. auf das Zweirad 1 liefern, oder aber auch um Sensoren zur Messung der Winkelgeschwindigkeit X₂ des Zweirads 1, jeweils gemessen um beispielsweise die Achsen des Motorrads. Optional können aber auch Sensoren zur Bestimmung der Geschwindigkeit des Neigungswinkels oder von Scher- bzw. Schlingerbewegungen des Zweirads 1 in der Sensoreinheit 11 enthalten sein. Optional können weiters beispielsweise der gefahrene Kurvenradius, Aufwärts- und Abwärtsfahrtbewegungen oder Ableitungen, insbesondere zeitliche Ableitungen aller dieser Messwerte oder davon abgeleitete Werte, ermittelt werden.

Zunächst wird in Verfahrensschritt a) eine Karte M von Streckenabschnitten zur Verfügung gestellt, in denen einzelne vergangene Verkehrsunfälle von motorisierten Zweirädern 1 verzeichnet sind. Bei der Karte M handelt es sich im gezeigten Ausführungsbeispiel um eine geografische Landkarte, die z.B. als digitale GPS-Karte zur Verfügung stehen kann und in der einzelne bekannte Unfallstellen verzeichnet sind.

Fig. 2 zeigt ein Beispiel einer derartigen Karte M mit Streckenabschnitten AB, BC, CD, BD und CE sowie FG. Im gezeigten Ausführungsbeispiel sind auf den Streckenabschnitten BC bzw. DE geographische Punkte 101, ..., 106 eingetragen, an denen einzelne vergangene Verkehrsunfälle verzeichnet wurden.

Mit dem motorisierten Zweirad 1 werden in dem zweiten Schritt b) Testfahrten F₁, F₂, F₃ in den zu untersuchenden Straßenabschnitten vorgenommen. Im gezeigten Ausführungsbeispiel soll zunächst der Streckenabschnitt BC untersucht werden. Ein motorisiertes Zweirad 1 durchfährt deshalb den Streckenabschnitt BC, wobei zu einzelnen Zeitpunkten jeweils Datensätze erstellt werden, die die geografische Position des Zweirads 1 sowie eine Anzahl von die Bewegungen des Zweirads 1 charakterisierenden Bewegungswerten umfassen.

Für die folgenden Betrachtungen sind die einzelnen Bewegungswerte festgelegt durch Beschleunigungsmesswerte X₁ bezogen auf das Zweirad 1 nach einer oder mehreren Raumrichtungen sowie Winkelgeschwindigkeitsmesswerte X₂ des Zweirads 1 gemessen jeweils um vorzugsweise die Achsen des Zweirads 1 bzw. zeitliche Ableitungen dieser Messwerte oder davon abgeleitete Werte.

Obwohl im gezeigten Ausführungsbeispiel die ermittelten Datensätze somit jeweils zwei charakteristische Bewegungswerte, nämlich Beschleunigungsmesswerte X₁ und Winkelgeschwindigkeitsmesswerte X₂, umfassen, können optional weitere Bewegungswerte, die charakteristisch für die Bewegung des Zweirads sind, in den Datensätzen umfasst sein, sodass jeder Datensatz n Einträge umfasst, ohne dass der erfindungsgemäße Verfahrensablauf abgeändert wird.

Anschließend wird in einem dritten Verfahrensschritt c) unter den ermittelten Datensätzen aufgrund der Bewegungswerte ein Clustering vorgenommen und nach einem oder mehreren charakteristischen Clustern C₁, C₂ gesucht, die einen normalen Bewegungsablauf des Zweirads 1 während einer Testfahrt F₁, F₂, F₃ charakterisieren und eine möglichst große Anzahl von Datensätzen enthalten.

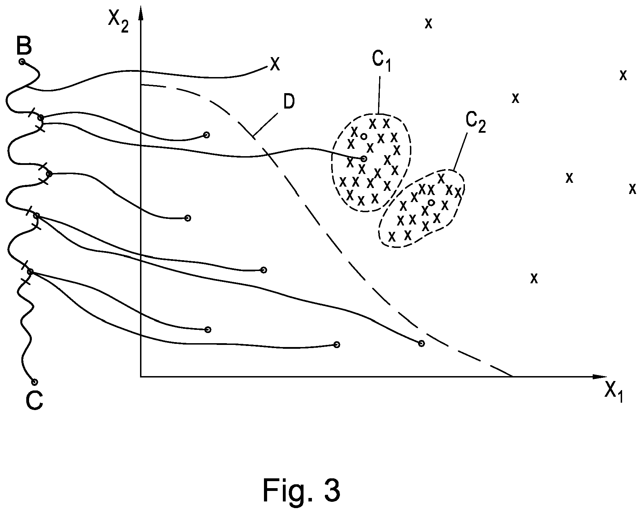

Fig. 3 zeigt eine schematische Darstellung eines zweidimensionalen Merkmalsraums, in dem die ermittelten Datensätze, die während der Testfahrt auf dem Streckenabschnitt BC mit dem Zweirad 1 erstellt wurden, in Verbindung mit deren geografischer Position eingetragen sind. Auf der horizontalen Achse sind dabei die Beschleunigungsmesswerte X₁ eines jeweiligen Datensatzes aufgetragen, während auf der vertikalen Achse jeweils die Winkelgeschwindigkeitsmesswerte X₂ aufgetragen sind.

Die Wahl eines zweidimensionalen Merkmalsraums erfolgte hier lediglich aus Gründen der übersichtlicheren Darstellung. Der Einfachheit halber ist im gezeigten Ausführungsbeispiel ein zweidimensionaler Merkmalsraum dargestellt. Es können jedoch beliebig weitere Bewegungswerte für die Clusteranalyse herangezogen werden, sodass sich beispielsweise bei n berücksichtigten Bewegungswerten ein insgesamt n-dimensionaler Merkmalsraum ergibt.

Die mit Kreuzen gekennzeichneten Datensätze in Fig. 3 wurden dabei an geografischen Positionen aufgenommen, an denen in der Karte (M) keine vergangenen Verkehrsunfälle verzeichnet sind, während die mit Ringen gekennzeichneten Datenpunkte von geografischen Positionen stammen, an denen in der Karte (M) bereits vergangene Verkehrsunfälle von motorisierten Zweirädern 1 verzeichnet sind.

Für das Clustering können bekannte Clusteringalgorithmen, wie sie beispielsweise in *"*k-Means: MacQueen, J. B. (1967). Some Methods for classification and Analysis of Multivariate Observations. Proceedings of 5th Berkeley Symposium on Mathematical Statistics and Probability. 1. University of California Press. pp. 281- 297*", "*Ling, R. F. (1972) "On the theory and construction of k-clusters". The Computer Journal. 15 (4): 326-332*"* oder *"*McLachlan, G.J. (1988), "Mixture Models: inference and applications to clustering", Statistics: Textbooks and Monographs, Dekker*"* beschrieben sind, herangezogen werden.

Im gezeigten Ausführungsbeispiel wurden derart zwei Cluster C₁, C₂ identifiziert, die den normalen Bewegungsablauf des Zweirads 1 charakterisieren. Wie in Fig. 3 zu erkennen ist, umfassen Cluster C₁ bzw. Cluster C₂ jeweils Datensätze, die von geografischen Positionen, die nicht als Unfallhäufungsstellen verzeichnet sind bzw. an denen keine vergangenen Verkehrsunfälle von Zweirädern 1 verzeichnet sind. Im gezeigten Ausführungsbeispiel umfassen die Cluster C₁, C₂ auch Datensätze, die von geografischen Positionen stammen, die mit vergangenen Verkehrsunfällen von Zweirädern 1 assoziiert sind.

Im nachfolgenden Verfahrensschritt d) wird anschließend mittels Diskriminanzanalyse eine zwischen kritischen und unkritischen Datensätzen diskriminierende Funktion bzw. Diskriminanzfunktion D abhängig von den Bewegungswerten der Datensätze gesucht. Dabei können aus dem Stand der Technik bekannte Ansätzen für Diskriminanzanalyse herangezogen werden, wie sie beispielsweise in *"*Duda, R.O., Hart, P.E., Stork, D.G. (2001) "Pattern Classification", Wiley, New York*", "*Cortes, C.; Vapnik, V. N. (1995) "Support-vector networks", Machine Learning. 20 (3): 273-297" oder *"*Tipping, M. E. (2001) "Sparse Bayesian Learning and the Relevance Vector Machine", Journal of Machine Learning Research. 1: 211-244" beschrieben sind.

Wie in Fig. 3 zu erkennen ist, grenzt die Diskriminanzfunktion D dabei einzelne Datensätze, die aus geografischen Positionen stammen, die aufgrund der vorgegebenen Karte M einer Region mit einem Verkehrsunfall zugeordnet sind, im Mittel von einzelnen weiteren Datensätzen, auf die dies nicht zutrifft, ab. Die einzelnen Datensätze, die aus geografischen Positionen stammen, die aufgrund der vorgegebenen Karte M einem Verkehrsunfall zugeordnet sind, werden dabei als kritische Datensätze, die einzelnen weiteren Datensätze, für die dies nicht zutrifft, als unkritische Datensätze erkannt.

Dabei werden die ermittelten Cluster C₁, C₂ oder daraus abgeleitete Werte für die Bildung der Diskriminanzfunktion D herangezogen, wobei die in den Clustern C₁, C₂ enthaltenen Datensätze zumindest im Mittel durch die Diskriminanzfunktion D als unkritisch klassifiziert werden.

Auf diese Weise werden, wie in Fig. 3 ersichtlich ist, die von den Unfallhäufungsstellen bzw. den geographische Punkten 101, ..., 106, an denen einzelne vergangene Verkehrsunfälle motorisierter Zweiräder 1 verzeichnet wurden, stammenden Datensätze von der Diskriminanzfunktion D als kritisch klassifiziert, während die restlichen außerhalb dieser Unfallhäufungsstellen ermittelten Datensätze als unkritisch betrachtet werden.

Im gezeigten Ausführungsbeispiel werden als Verfahrensschritt e) weitere Datensätze aufgrund weiterer Testfahrten F₁, F₂, F₃ wie zuvor beschrieben ermittelt, was jedoch keinesfalls zwingend ist. Es ist selbstverständlich auch möglich ausschließlich die in Schritt b) ermittelten Datensätze für die weiteren Betrachtungen zu verwendeten. Die weiteren Testfahrten F₁, F₂, F₃ werden im gezeigten Ausführungsbeispiel auf dem Streckenabschnitt FG, der in Fig. 2 schematisch dargestellt ist, durchgeführt.

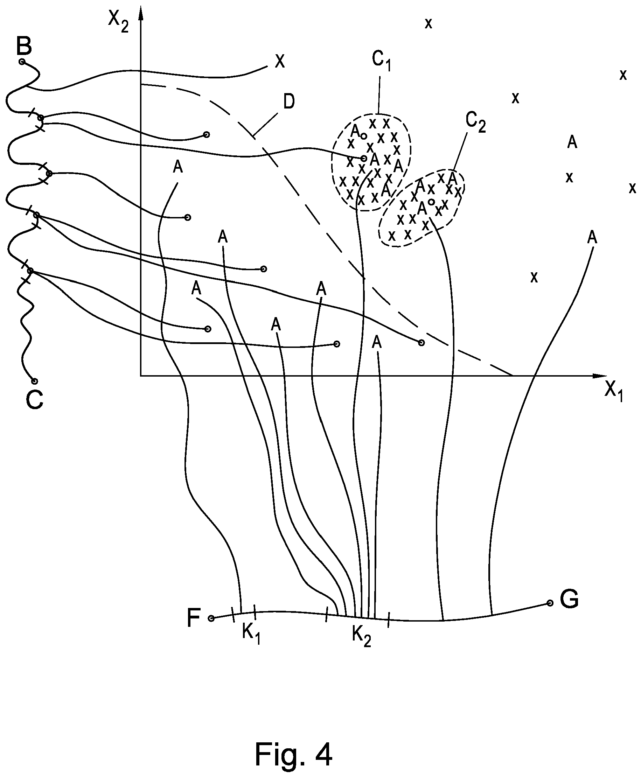

Wie in Fig. 4 ersichtlich ist, werden während der Testfahrten F₁, F₂, F₃ Datensätze, wie zuvor beschrieben, ermittelt, die in dem in Fig. 4 dargestellten zweidimensionalen Merkmalsraum sowohl im Bereich der von der Diskriminanzfunktion D als unkritisch ermittelten Datensätze liegen als auch solche, die im Bereich der von der Diskriminanzfunktion D als kritisch ermittelten Datensätze liegen. Erwartungsgemäß liegen auch Datensätze innerhalb der Cluster C₁, C₂, die den normalen Bewegungsablauf des motorisierten Zweirads 1 repräsentieren.

Auf diese Weise ist es mit Hilfe der zuvor durchgeführten Diskriminanzanalyse möglich, diejenigen Straßenabschnitte, in denen Datensätze oder gegebenenfalls weitere Datensätze vorhanden sind, mit Hilfe der Diskriminanzfunktion D als kritische Datensätze zu erkennen und diese Straßenabschnitte als kritische Straßenabschnitte K zu identifizieren. Dies ist auch für Straßenabschnitte möglich, für die in Schritt a) keine Unfallkartendaten zur Verfügung gestellt wurden.

Auf diese Weise können, wie in Fig. 4 ersichtlich ist, zwei kritische Straßenabschnitte K₁, K₂, auf dem Straßenabschnitt FG, für den keine Unfallkartendaten zur Verfügung stehen, also potentielle Gefahrenstellen für Zweiradfahrer, ermittelt werden, die in ihrer Streckenführungscharakterisitk bzw. dem mit den Sensoren der Sensoreinheit 11 ermittelten Bewegungsablauf des Zweirads 1 Ähnlichkeiten mit der Streckenführung und/oder dem ermittelten Bewegungsablauf an geografischen Positionen aufweisen, an denen Datensätze ermittelt wurden, die mit Hilfe der Diskriminanzfunktion D als kritische Datensätze ermittelt wurden bzw. die im Merkmalsraum im Bereich der kritischen Datensätze verortet sind.

Ein erfindungsgemäßes Verfahren identifiziert auf diese Weise einzelne derartiger kritischer Straßenabschnitte K; K₁, K₂, sodass beispielsweise Straßenerhalter die derart aufgefundenen kritischen Straßenabschnitte gezielt entschärfen können, indem beispielsweise die Straßenführung geändert wird oder sonstige Maßnahmen getroffen werden, um die Sicherheit von Zweirad- bzw. Motorradfahrern auf diesen Abschnitten zu erhöhen.

Optional kann bei einem erfindungsgemäßen Verfahren auch vorgesehen sein, dass die Diskriminanzanalyse eine im Bezug auf die Bewegungswerte festgelegte Diskriminanzfunktion D liefert, die insbesondere stetig sein kann und das für die Diskriminanzanalyse eine Vielzahl von Testfahrten F₁, F₂, F₃ herangezogen werden, nämlich Testfahrten gemäß Schritt b) in den zu untersuchenden Straßenabschnitten, weitere Testfahrten gemäß Schritt e), sowie andere Testfahrten.

Für einzelne dieser Testfahrten F₁, F₂, F₃ oder für eine Anzahl von vom selben Testfahrer ausgeführten Testfahrten F₁, F₂, F₃ wird jeweils ein Mittelwert der Diskriminanzfunktion D angewendet, auf die Datensätze der jeweiligen Testfahrt oder Testfahrten ermittelt. Dabei werden für die Bildung des Mittelwerts ausschließlich diejenigen Datensätze verwendet, die sich innerhalb eines kritischen Straßenabschnitts K befinden.

Anschließend wird ein Schwellenwert für einzelne dieser Testfahrten F₁, F₂, F₃ oder für eine Anzahl von vom selben Testfahrer ausgeführten Testfahrten F₁, F₂, F₃ herangezogen und untersucht, an welchen Stellen der Wert der Diskriminanzfunktion D, angewendet auf den jeweiligen Datensatz, diesen Schwellenwert überschreitet. Als Schwellenwert wird dabei beispielsweise der Mittelwert der Diskriminanzfunktion D an den als kritisch identifizierten Straßenabschnitten K herangezogen.

Für einzelne geografische Positionen wird anschließend jeweils ein Verhältnis zwischen der Anzahl der Schwellenwertüberschreitungen und der Anzahl der Testfahrten F₁, F₂, F₃ jeweils an der betreffenden geografischen Position ermittelt und als zusätzliches Maß für die Kritikalität der betreffenden geografischen Position zur Verfügung gehalten.

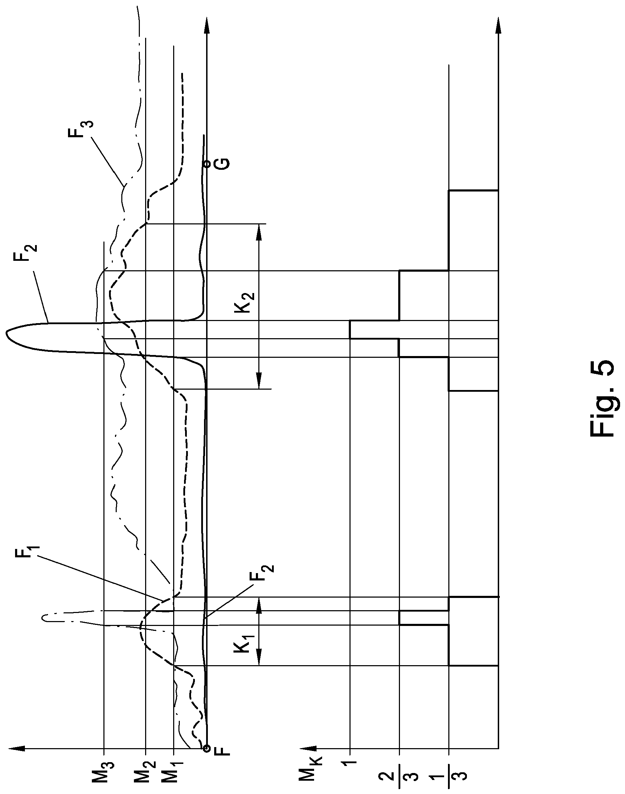

Fig. 5 zeigt ein Beispiel einer derartigen Vorgehensweise für drei Testfahrten F₁, F₂, F₃, die auf dem Streckenabschnitt FG durchgeführt wurden. In Fig. 5 sind dabei drei Testfahrten F₁, F₂, F₃ dargestellt, für die jeweils der entsprechende Mittelwert M₁, M₂, M₃ ermittelt wurde. Für die zuvor bereits als kritisch erkannten Straßenabschnitte K₁, K₂ wird im gezeigten Ausführungsbeispiel ermittelt, wie oft an den einzelnen geografischen Positionen jeweils der Schwellenwert, d.h. der Mittelwert, überschritten wurde bzw. wie das Verhältnis zwischen der Anzahl an Schwellenwertüberschreitungen und der Anzahl an Testfahrten F₁, F₂, F₃ ist. Die Testfahrt F₁ ist dabei in Fig. 5 strichliert, die Testfahrt F₂ als durchgezogene Linie und die Testfahrt F₃ als strichpunktierte Linie dargestellt. In Fig. 5 sind weiters die beiden als kritisch eingestuften Streckenabschnitte K₁, K₂ dargestellt und die Anzahl an Mittelwertüberschreitungen in diesen beiden als kritisch eingestuften Streckenabschnitten in Form eines Blockdiagramms abgebildet.

Für den kritischen Streckenabschnitt K₁ ist ersichtlich, dass der Mittelwert M₁ der Testfahrt F₁ über den gesamten kritischen Streckenabschnitt K₁ überschritten wurde, während bei der Testfahrt F₃ der Mittelwert M₃ in einem begrenzten Bereich des kritischen Streckenabschnitts K₁ überschritten wurde. Dies bedeutet, dass im kritischen Streckenabschnitt K₁ eine Mittelwertüberschreitung bei zumindest einem Drittel und abschnittsweise bei zwei Dritteln aller vorgenommenen Testfahrten F₁, F₂, F₃ aufgetreten ist.

Im kritischen Streckenabschnitt K₂ wurde während der Testfahrt F₁ der Mittelwert M₁ über den gesamten Bereich des kritischen Streckenabschnitts K₂ überschritten, sowie in begrenzten Bereichen innerhalb des kritischen Streckenabschnitts K₂ der Mittelwert M₃ während der Testfahrt F₃ sowie der Mittelwert M₂ während der Testfahrt F₂. Dies bedeutet, dass über den kritischen Streckenabschnitt K₂ zumindest bei einem Drittel, abschnittsweise bei zwei Dritteln bzw. allen vorgenommenen Testfahrten F₁, F₂, F₃ eine Mittelwertüberschreitung vorlag.

Wie in Fig. 5 weiters ersichtlich ist, können Schwellenwertüberschreitungen bei einer Testfahrt F₁, F₂, F₃ auch außerhalb von kritischen Streckenabschnitten K auftreten, beispielsweise, wenn eine Testfahrt F₁, F₂, F₃ auf einem Straßenabschnitt durchgeführt wird, für den bereits kritische Streckenabschnitte K auf Grundlage von Datensätzen, die während anderer, bereits zuvor durchgeführter, Testfahrten ermittelt wurden. Dies ist in Fig. 5 beispielsweise bei dem direkt an den kritischen Streckenbereich K₂ in Richtung des Straßenendpunkts G angrenzenden Streckenbereich zu erkennen, wo eine Mittelwertüberschreitung bei der Testfahrt F₁ außerhalb des kritischen Streckenbereichs K₂ auftritt.

Optional kann die Diskriminanzfunktion D bei einem erfindungsgemäßen Verfahren in Abhängigkeit von den Bewegungswerten derart ermittelt werden, dass einzelne Datensätze, die aus geografischen Positionen stammen, die aufgrund der vorgegebenen Karte M einem vergangenen Verkehrsunfall zugeordnet sind, als kritische Datensätze identifiziert werden, wobei jedoch diejenigen Datensätze, die aus geografischen Positionen stammen, die mit einem Verkehrsunfall assoziiert sind und die einem Cluster C₁, C₂ zugeordnet wurden, das den normalen Bewegungsablauf eines motorisierten Zweirads 1 repräsentiert, nicht als kritische Datensätze erkannt werden.

Alle übrigen Datensätze, für die dies nicht zutrifft, d.h. die nicht aus geografischen Positionen stammen, die mit einem Verkehrsunfall assoziiert sind oder die sich innerhalb eines zuvor ermittelten Clusters C₁, C₂ befinden, das den normalen Bewegungsablauf eines motorisierten Zweirads 1 während einer Testfahrt F₁, F₂, F₃ charakterisiert, werden als unkritische Datensätze identifiziert. Diese Vorgehensweise liefert vorteilhafterweise ein rasches Ergebnis der Diskriminanzanalyse und eine Diskriminanzfunktion D, die besonders rasch und einfach kritische von unkritischen Datensätzen abgrenzt.

Ein derartiges erfindungsgemäßes Verfahren kann nun nicht nur zum Einsatz kommen, um kritische Streckenabschnitte K bei Testfahrten auf Straßenabschnitten zu identifizieren, für die beispielsweise noch keine kritischen Streckenabschnitte K bzw. potentielle Unfallhäufungsstellen identifiziert wurden, zu ermitteln. Optional kann auch vorgesehen sein, dass während einer Fahrt eines motorisierten Zweirads 1 in einem zu untersuchenden Streckenabschnitt laufend untersucht wird, ob sich die jeweils aktuelle geografische Position des Zweirads 1 einem als kritisch identifizierten Streckenabschnitt nähert. Ist dies der Fall, kann beispielsweise ein Warnhinweis an den Fahrer des motorisierten Zweirads 1 abgegeben werden, sodass der Fahrer rechtzeitig gewarnt ist, dass er sich einer potentiellen Gefahrenstelle bzw. einem kritischen Streckenabschnitt K nähert und seinen Fahrstil entsprechend an die örtlichen Gegebenheiten anpassen kann, wodurch Unfälle vermieden werden können.

Weiters kann ein erfindungsgemäßes Verfahren durch Vergleich mit Datensätzen, insbesondere Bewegungswerten bzw. Fahrdynamikwerten, an bekannten Unfallstellen dazu dienen, einen individuellen Grenzwert für einen Fahrer zu ermitteln und den Fahrer zu warnen, wenn dessen Fahrdynamikwerte oberhalb des individuellen Grenzwertes erreicht.

Dazu kann beispielsweise vorab für eine Anzahl von vom selben Fahrer ausgeführten Fahrten jeweils ein Grenzwert auf Grundlage der Datensätze der jeweiligen Fahrt oder Fahrten, ermittelt wird. Dazu wird der Mittelwert der Diskriminanzfunktion D angewendet auf die Datensätze der jeweiligen Fahrt oder Fahrten, beispielsweise ausschließlich diejenigen Datensätze, die sich innerhalb eines kritischen Straßenabschnitts K; K₁, K₂ befinden, ermittelt und als Grenzwert herangezogen. Optional kann für eine Anzahl von vom selben Fahrer ausgeführten Fahrten ein gemeinsamer Grenzwert, d.h. ein gemeinsamer Mittelwert, ermittelt werden.

Unternimmt nun derselbe Fahrer eine Fahrt, so kann während der Fahrt laufend untersucht werden, ob der Wert der Diskriminanzfunktion D angewendet auf die Datensätze, die laufend während der Fahrt erstellt werden, innerhalb eines vorgegebenen Wertebereichs unterhalb des für den jeweiligen Fahrer ermittelten Grenzwerts liegt und/oder den ermittelten Grenzwert überschreitet.

Wird dabei festgestellt, dass der Wert der Diskriminanzfunktion D angewendet auf die jeweils aktuellen Datensätze der aktuellen Fahrt, innerhalb des vorgegebenen Wertebereichs unterhalb des für den jeweiligen Fahrer ermittelten Grenzwerts liegt und/oder den ermittelten Grenzwert überschreitet, so wird ein Hinweis an den Fahrer des motorisierten Zweirads 1 abgegeben und der Fahrer wird derart gewarnt, dass sein aktueller Fahrstil potentiell riskant ist.

Die geografische Position des motorisierten Zweirads 1 kann während einer Testfahrt F₁, F₂, F₃ oder Fahrt beispielsweise mit GPS oder Satellitennavigation ermittelt werden. Selbstverständlich ist ein erfindungsgemäßes Verfahren auch für andere motorisierte Zweiräder 1 wie beispielsweise Mopeds oder E-Bikes einsetzbar, um auch kritische Streckenabschnitte K für diese Fortbewegungsmittel, die gegebenenfalls von anderen Personengruppen genutzt werden, zu ermitteln.

Optional kann während einer Fahrt eines motorisierten Zweirads 1 in einem zu untersuchenden Streckenabschnitt im Zusammenhang mit der laufenden Untersuchung, ob sich die jeweils aktuelle geografische Position des Zweirads 1 einem als kritisch identifizierten Streckenabschnitt nähert, nicht nur ein Warnhinweis an den Fahrer des motorisierten Zweirads 1 abgegeben werden. Zusätzlich oder alternativ dazu kann auch ein Warnhinweis, der eine Regelabweichung repräsentiert, an z.B. das Regelungssystem des motorisierten Zweirads 1 übermittelt werden. Bei Detektion eines derartigen Warnhinweises kann das Regelungssystem automatisiert beispielsweise die Geschwindigkeit drosseln, wodurch die Unfallgefahr in kritischen Streckenabschnitten reduziert werden kann. Die Übermittlung derartiger Warnhinweise kann im Zusammenhang mit der zunehmenden Fahrzeug-Automatisierung bzw. im Zusammenhang mit autonomem Fahren besonders vorteilhaft sein.

## Patentansprüche

1. Verfahren zur Bestimmung von kritischen Straßenabschnitten (K; K₁, K₂) für motorisierte Zweiräder (1), insbesondere Motorräder, wobei
a) eine Karte (M) von Streckenabschnitten zur Verfügung gestellt wird, in denen einzelne vergangene Verkehrsunfälle von motorisierten Zweirädern verzeichnet sind,
b) jeweils mittels eines motorisierten Zweirads (1) Testfahrten (F₁, F₂, F₃) in den zu untersuchenden Straßenabschnitten vorgenommen werden,
- wobei jeweils zu einzelnen Zeitpunkten Datensätze erstellt werden, die die geographische Position des Zweirads sowie eine Anzahl von die Bewegung des Zweirads (1) charakterisierenden Bewegungswerten umfassen,
- wobei die einzelnen Bewegungswerte insbesondere festgelegt sind durch:
- Beschleunigungsmesswerte (X₁) nach einer oder mehrerer Raumrichtungen bezogen auf das Zweirad (1) und/oder
- Winkelgeschwindigkeitsmesswerte (X₂) des Zweirads (1), gemessen jeweils um Achsen, die vorzugsweise in Bezug auf das Zweirad (1) festgelegt sind, und/oder
- gegebenenfalls zeitliche Ableitungen dieser Messwerte, und/oder
- davon abgeleitete Werte,
c) unter den ermittelten Datensätzen aufgrund der Bewegungswerte ein Clustering vorgenommen wird und nach einem oder mehreren einen normalen Bewegungsablauf charakterisierenden Clustern (C₁, C₂) gesucht wird, die eine möglichst große Anzahl von Datensätzen enthalten,
d) mittels Diskriminanzanalyse eine zwischen kritischen und unkritischen Datensätzen diskriminierende Funktion abhängig von den Bewegungswerten der Datensätze gesucht wird, die
- einzelne Datensätze, die aus geographischen Positionen stammen, die aufgrund der vorgegebenen Karte (M) einer Region mit einem Verkehrsunfall zugeordnet sind, als kritische Datensätze und
- einzelne weitere Datensätze, für die dies nicht zutrifft, als unkritische Datensätze, voneinander zumindest im Mittel, insbesondere exakt, abgrenzt,
wobei die ermittelten Cluster (C₁, C₂) oder daraus abgeleitete Werte für die Bildung der Diskriminanzfunktion (D) herangezogen werden, dass die in den Clustern (C₁, C₂) enthaltenen Datensätze zumindest im Mittel durch die Diskriminanzfunktion (D) als unkritisch klassifiziert werden,
e) gegebenenfalls weitere Datensätze aufgrund weiterer Testfahrten (F₁, F₂, F₃) analog zu Schritt b) ermittelt werden, und
f) diejenigen Straßenabschnitte, in denen Datensätze oder gegebenenfalls weitere Datensätze vorhanden sind, die entsprechend der Diskriminanzanalyse als kritische Datensätze erkannt wurden, als kritische Straßenabschnitte (K; K₁, K₂) identifiziert werden und wobei
- während einer Fahrt eines motorisierten Zweirads (1) in einem zu untersuchenden Streckenabschnitt laufend untersucht wird, ob sich die jeweils aktuelle geographische Position des Zweirads (1) einem als kritisch identifizierten Streckenabschnitt (K; K₁, K₂) nähert und
- ein Hinweis an den Fahrer des motorisierten Zweirads (1) abgegeben wird, wenn eine derartige Annäherung erkannt wird.

2. Verfahren nach Anspruch 1, **dadurch gekennzeichnet,**
- **dass** die Diskriminanzanalyse eine in Bezug auf die Bewegungswerte festgelegte, insbesondere stetige, Diskriminanzfunktion (D) liefert, und
- **dass** die folgenden Testfahrten (F₁, F₂, F₃) herangezogen werden,
- Testfahrten, nach Schritt b)
- weitere Testfahrten, nach Schritt e)
- andere Testfahrten
- wobei für einzelne dieser Testfahrten (F₁, F₂, F₃) oder für eine Anzahl von vom selben Testfahrer ausgeführten Testfahrten (F₁, F₂, F₃) jeweils ein Mittelwert der Diskriminanzfunktion (D) angewendet auf die Datensätze der jeweiligen Testfahrt oder Testfahrten (F₁, F₂, F₃) ermittelt wird, wobei für die Bildung des Mittelwerts ausschließlich diejenigen Datensätze verwendet werden, die sich innerhalb eines kritischen Straßenabschnitts (K; K₁, K₂) befinden,
- wobei für einzelne dieser Testfahrten (F₁, F₂, F₃) oder für eine Anzahl von vom selben Testfahrer ausgeführten Testfahrten (F₁, F₂, F₃) der Mittelwert als Schwellenwert herangezogen wird und untersucht wird, an welchen Stellen der Wert der Diskriminanzfunktion (D) angewendet auf den jeweiligen Datensatz den Mittelwert überschreitet und
- wobei für einzelne geographische Positionen jeweils ein Verhältnis zwischen der Anzahl der Schwellenwertüberschreitungen und der Anzahl der Testfahrten (F₁, F₂, F₃) jeweils an der betreffenden geographischen Position, ermittelt und als zusätzliches Maß für die Kritikalität der betreffenden geographischen Position zur Verfügung gestellt wird.

3. Verfahren nach Anspruch 1 oder 2, **dadurch gekennzeichnet, dass** in Schritt d) mittels Diskriminanzanalyse eine diskriminierende Funktion abhängig von den Bewegungswerten gesucht wird, die
- einzelne Datensätze, die aus geographischen Positionen stammen, die aufgrund der vorgegebenen Karte (M) einer Region mit einem Verkehrsunfall zugeordnet sind, mit Ausnahme derjenigen Datensätze, die in Schritt c) einem Cluster (C₁, C₂) zugeordnet wurden, als kritische Datensätze und
- alle übrigen Datensätze, für die dies nicht zutrifft oder die sich innerhalb eines zuvor ermittelten den normalen Bewegungsablauf charakterisierenden Clustern (C₁, C₂) befinden, als unkritische Datensätze,
voneinander, insbesondere exakt, abgrenzt.

4. Verfahren nach einem der vorangehenden Ansprüche, **dadurch gekennzeichnet, dass**
- vorab für eine Anzahl von vom selben Fahrer ausgeführten Fahrten mit einem motorisierten Zweirad (1) jeweils ein Mittelwert der Diskriminanzfunktion (D) angewendet auf die Datensätze der jeweiligen Fahrt oder Fahrten, ermittelt wird,
wobei insbesondere vorgesehen ist, dass
- für die Bildung des Mittelwerts ausschließlich diejenigen Datensätze verwendet werden, die sich innerhalb eines kritischen Straßenabschnitts (K; K₁, K₂) befinden, und/oder
- für eine Anzahl von vom selben Fahrer ausgeführten Fahrten ein gemeinsamer Mittelwert ermittelt wird,
- der derart ermittelte Mittelwert als Grenzwert herangezogen,
- während einer Fahrt desselben Fahrers laufend untersucht wird, ob der Wert der Diskriminanzfunktion (D) angewendet auf die während der Fahrt erstellten jeweils aktuellen Datensätze innerhalb eines vorgegebenen Wertebereichs unterhalb des für den jeweiligen Fahrer ermittelten Grenzwerts liegt und/oder den ermittelten Grenzwert überschreitet und
- sofern festgestellt wird, dass der Wert innerhalb des vorgegebenen Wertebereichs liegt und/oder den ermittelten Grenzwert überschreitet, ein Hinweis an den Fahrer des motorisierten Zweirads (1) abgegeben wird.

## Claims

1. Procedure for determining critical road sections (K; K₁; K₂) for motorized two-wheelers (1), in particular motorcycles, in which
a) a map (M) of route sections is made available in which individual past traffic accidents involving motorized two-wheelers are recorded,
b) each by means of a motorized two-wheeler (1), test drives (F₁; F₂; F₃) are carried out in the road sections to be examined,
- in which data records are created at individual points in time which include the geographical position of the two-wheeler and a number of movement values characterizing the movement of the two-wheeler (1),
- in which the individual movement values are determined in particular by:
- Acceleration measurement values (X₁) in one or more spatial directions related to the two-wheeler (1) and / or
- Measured angular velocity values (X₂) of the two-wheeler (1), each measured about axes, which are preferably defined related to the two-wheeler (1), and / or
- if necessary, temporal derivatives of these measured values, and / or
- values derived therefrom,
c) a clustering is carried out among the data records determined on the basis of the movement values, and one or more clusters characterizing a normal movement sequence (C₁, C₂) is searched for that contain the largest possible number of data records,
d) by means of discriminant analysis, a function is searched for to discriminate between critical and non-critical data sets depending on the movement values of the data sets, separating from each other at least on average, in particular exactly,
- as critical data records individual data records that originate from geographical positions that are assigned to a region with a traffic accident on basis of the predetermined map (M) and
- as uncritical data records individual further data records for which this does not apply,
in which the determined clusters (C₁, C₂) or values derived therefrom are used for the formation of the discriminant function (D) so that the data sets contained in the clusters (C₁, C₂) are classified at least on average as uncritical by the discriminant function (D),
e) if necessary, further data sets based on further test drives (F₁; F₂; F₃) are determined analogously to step b), and
f) those road sections in which data sets or possibly further data sets are present which were recognized as critical data sets according to the discriminant analysis, are identified as critical road sections (K; K₁; K₂),
and in which
- while a motorized two-wheeler (1) is traveling in a route section to be investigated, it is continuously examined whether the current geographic position of the two-wheeler (1) approaches a route section (K; K₁; K₂) that has been identified as a critical one and
- a message is given to the driver of the motorized two-wheeler (1) when such an approach is detected.

2. Method according to claim 1, **characterized in that**
- the discriminant analysis provides a, in particular continuous, discriminant function (D) which is determined with respect to the movement values, and
- the following test drives (F₁; F₂; F₃) can be used,
- test drives after step b)
- further test drives, after step e)
- other test drives
- in which for some of these test drives (F₁; F₂; F₃) or for a number of test drives (F₁; F₂; F₃) carried out by the same test drivers an average of the discriminant function (D) applied to the data records of the respective test drive or test drives (F₁; F₂; F₃) is determined, using only those data sets for the formation of the mean value that are located within a critical street section (K; K₁; K₂),
- in which for some of these test drives (F₁; F₂; F₃) or for a number of test drives (F₁; F₂; F₃) carried out by the same test drivers the mean value is used as the threshold value, and it is investigated at which points the value of the discriminant function (D) applied to the respective data set exceeds the mean value and
- in which for individual geographical positions a ratio between the number of threshold values exceeded and the number of test drives (F₁; F₂; F₃) is determined at each relevant geographical position and is made available as an additional measure for the criticality of the relevant geographical position.

3. Method according to Claim 1 or 2, **characterized in that**, in step d), a discriminant analysis is used to search for a discriminant function as a function of the movement values, separating from each other, in particular exactly,
- as critical data records individual data records that originate from geographical positions that are assigned to a region with a traffic accident on the basis of the predetermined map (M), with the exception of those data records that were assigned to a cluster (C₁, C₂) in step c) and
- as uncritical data records all other data records for which this does not apply or which are located in the previously calculated clusters characterizing the normal movement sequence (C₁, C₂).

4. Method according to one of the preceding claims, **characterized in that**
- a mean value of the discriminant function (D) applied to the data records of the respective drive or drives is determined in advance for a number of drives made by the same driver with a motorized two-wheeler (1),
in which it is provided in particular that
- only those data sets are used for the formation of the mean value that are located within a critical road section (K; K₁; K₂), and / or
- a common mean value is determined for a number of drives made by the same driver,
- the mean value determined in this way is used as threshold value,
- during a drive by the same driver, it is continuously examined whether the value of the discriminant function (D) applied to the current data records created during the drive lies within a specified value range below the threshold value determined for the respective driver and / or exceeds the determined threshold value and
- if it is determined that the value lies within the specified value range and / or exceeds the determined threshold value, a message is sent to the driver of the motorized two-wheeler (1).

## Revendications

1. Procédure de détermination des tronçons de route critiques (K; K₁; K₂) pour les deux-roues motorisés (1), en particulier les motocycles, dans laquelle
a) une carte (M) des tronçons d'itinéraire est mise à disposition, dans laquelle sont enregistrés les accidents de la circulation passés avec des deux-roues motorisés,
b) chacun au moyen d'un deux-roues motorisé (1) essais de conduite (F₁; F₂; F₃) sont effectuées dans les tronçons de route à examiner,
- où des enregistrements de données sont créés à des moments individuels dans le temps qui comprennent la position géographique du deux-roues et un certain nombre de valeurs de mouvement caractérisant le mouvement du deux-roues (1),
- où les valeurs de mouvement individuelles sont déterminées notamment par:
- les valeurs d'accélération mesurées (X₁) dans une ou plusieurs directions spatiales par rapport au deux-roues (1), et / ou
- valeurs de vitesse angulaire mesurées (X₂) du deux-roues (1), mesurés chacun autour d'axes, qui sont de préférence définis par rapport au deux-roues (1), et / ou
- si nécessaire, des dérivées temporelles de ces valeurs mesurées, et / ou
- les valeurs qui en découlent,
c) un groupement est effectué parmi les enregistrements de données déterminés sur la base des valeurs de mouvement et après un ou plusieurs groupes caractérisant une séquence de mouvement normale (C₁, C₂) sont cherchés qui contiennent le plus grand nombre possible d'enregistrements de données,
d) au moyen d'une analyse discriminante, une fonction qui distingue les ensembles de données critiques et non critiques est cherchée en fonction des valeurs de mouvement des ensembles de données, qui au moins en moyenne, en particulier précisément, sépare
- enregistrements de données individuels provenant de positions géographiques attribuées à une région avec un accident de la circulation sur la base de la carte prédéterminée (M) en tant qu'enregistrements de données critiques et
- les autres enregistrements de données individuels pour lesquels cela ne s'applique pas en tant qu'enregistrements de données non critiques,
où les groupes déterminés (C₁, C₂) ou des valeurs qui en dérivent pour la formation de la fonction discriminante (D) sont utilisées que les ensembles de données contenus dans les groupes (C₁, C₂) sont classés au moins en moyenne comme non critiques par la fonction discriminante (D),
e) si nécessaire, d'autres ensembles de données basés sur d'autres essais de conduite (F₁; F₂; F₃) sont déterminées de manière analogue à l'étape b), et
f) les tronçons de route dans lesquels des ensembles de données ou éventuellement d'autres ensembles de données sont présents qui ont été reconnus comme des ensembles de données critiques selon l'analyse discriminante, sont identifiés comme des tronçons de route critiques (K; K₁; K₂),
et dans laquelle
- pendant qu'un deux-roues motorisé (1) circule dans un tronçon de route à étudier, on examine en permanence si la position géographique actuelle du deux-roues (1) s'approche d'un tronçon de route (K; K₁; K₂) identifié comme critique
- un message est donné au conducteur du deux-roues motorisé (1) lorsqu'une telle approche est détectée.

2. Procédure selon la revendication 1, **caractérisé en ce que**
- l'analyse discriminante fournit une fonction discriminante (D), notamment continue, fixe par rapport aux valeurs de mouvement, et
- les essais de conduite suivants (F₁; F₂; F₃) peut être utilisé,
- essais de conduite après l'étape b)
- essais de conduite supplémentaires, après l'étape e)
- autres essais de conduite
- où pour certains de ces essais de conduite (F₁; F₂; F₃) ou pour un certain nombre des essais de conduite (F₁; F₂; F₃) effectuée du même conducteur d'essai une moyenne de la fonction discriminante (D) est déterminée appliquée aux enregistrements de données de l'essai de conduite ou des essais de conduite respectifs (F₁; F₂; F₃), de sorte que seuls ces ensembles de données sont utilisés pour la formation de la valeur moyenne, qui se trouvent dans un tronçon de route (K; K₁; K₂) critique,
- où pour certains de ces essais de conduite (F₁; F₂; F₃) ou pour un certain nombre des essais de conduite (F₁; F₂; F₃) effectué du même conducteur d'essai, la valeur moyenne est utilisée comme valeur seuil et il est déterminé auxquels des points la valeur de la fonction discriminante (D) appliquée à l'ensemble de données respectif dépasse la valeur moyenne et
- où, un rapport entre le nombre de valeurs de seuil dépassées et le nombre de essais de conduite (F₁; F₂; F₃) pour des positions géographiques individuelles est déterminé dans chaque cas à la position géographique pertinente et il est mis à disposition en tant que mesure supplémentaire pour la criticité de la position géographique pertinente.

3. Procédure selon la revendication 1 ou 2, **caractérisé en ce que**, à l'étape d), une analyse discriminante est utilisée pour chercher une fonction discriminante en fonction des valeurs de mouvement, qui separe les uns des autres, en particulier exactement,
- les enregistrements de données individuels provenant de positions géographiques attribuées à une région avec un accident de la circulation sur la base de la carte prédéterminée (M), à l'exception des enregistrements de données qui ont été attribués à un groupe (C₁, C₂) en tant qu'enregistrements de données critiques et
- tous les autres enregistrements de données pour lesquels cela ne s'applique pas ou situés dans les groupes qui caractérisent la séquence de mouvement normale (C₁, C₂) en tant qu'enregistrements de données non critiques.

4. Procédure selon l'une des revendications précédentes, **caractérisé en ce que**
- une valeur moyenne de la fonction discriminante (D) appliquée aux enregistrements de données du trajet ou des trajets respectifs est déterminée à l'avance pour un certain nombre de trajets effectués par le même conducteur avec un deux-roues motorisé (1),
où il est notamment prévu que
- seuls ces ensembles de données sont utilisés pour la formation de la valeur moyenne localisés à l'intérieur d'une section de route critique (K; K₁; K₂), et / ou
- une valeur moyenne commune est déterminée pour un certain nombre de trajets effectués par le même conducteur,
- la valeur moyenne ainsi déterminée est utilisée comme valeur limite,
- lors d'un trajet par le même conducteur, il est continuellement examiné si la valeur de la fonction discriminante (D) appliquée aux enregistrements de données courants créés pendant le trajet se situe dans une plage de valeurs spécifiée inférieure à la valeur limite déterminée pour le conducteur concerné et / ou dépasse la valeur limite déterminée et
- s'il est déterminé que la valeur se situe dans la plage de valeurs spécifiée et / ou dépasse la valeur limite déterminée, un message est envoyé au conducteur du deux-roues motorisé (1).
